# EUROPÄISCHE PATENTANMELDUNG

(11) **EP 1 217 558 A1**
(43) Veröffentlichungstag der Anmeldung: **26.06.2002**
(21) Anmeldenummer: 00128168.2
(22) Anmeldetag: 21.12.2000
(51) Int. Cl.: G06F 17/60, A61J 7/04

(54) **Verfahren und Vorrichtung zur Erstellung eines angepassten Reise-Behandlungsschemas zur Applikation eines Medikaments bei einer Fernreise**

(71) Anmelder: Schnell, Oliver, Dr. Priv.-Doz., 80802 München (DE)
(72) Erfinder: Schnell, Oliver, Dr. Priv.-Doz., 80802 München (DE)
(74) Vertreter: Betten & Resch

(57) **Zusammenfassung**

Patienten mit bestimmten chronischen Erkrankungen wie etwa Diabetes benötigen medikamentöse Behandlung nach einem festgelegten zeitlichen Behandlungsschema. Ein derartiges Behandlungsschema muss bei Fernreisen in Länder mit Zeitverschiebung entsprechend angepasst werden. Ein Verfahren dazu weist die Schritte der Erfassung eines stationären Behandlungsschemas zur Applikation des Medikaments, Erfassung von Start- und Zielort sowie Reisezeitpunkt der Fernreise, Bestimmung der Zeitzonendifferenz zwischen Start- und Zielort und die Erzeugung eines angepassten Reise-Behandlungsschemas basierend auf dem stationären Behandlungsschema in Abhängigkeit von der Zeitzonendifferenz und dem Reisezeitpunkt auf. Die Erfindung ermöglicht einem Patienten auf bequeme Art und Weise eine strukturierte Anpassung seines individuellen Behandlungsschemas an die Zeitverschiebung in dem Zielland der Reise.

## Beschreibung

### TECHNISCHES GEBIET

Viele Krankheiten wie etwa Diabetes benötigen eine regelmäßige Behandlung mit bestimmten Medikamenten gemäß einem festgelegten zeitlichen Behandlungsschema. Diese Patienten müssen bei Femreisen in Länder mit einer Zeitverschiebung das Behandlungsschema, beispielsweise mit Insulin und/oder blutzuckersenkenden Tabletten entsprechend anpassen. Nur so können starke Blutzuckerschwankungen und eventuell lebensbedrohliche Entgleisungen des Stoffwechsels vermieden werden. Der Anpassungsvorgang richtet sich nach der jeweiligen Therapie und ist daher unmittelbar vom Therapieschema oder Behandlungsschema, d.h. vom Zeitpunkt und der Anzahl und Struktur der täglichen Insulininjektion und/oder der eingenommenen blutzuckersenkenden Tabletten abhängig.

### STAND DER TECHNIK

Bisher erfolgt die Anpassung eines Behandlungsschemas zur Behandlung einer Krankheit bei Fernreisen ohne ein strukturiertes und nachvollziehbares Konzept. Dies hat zur Folge, dass die Anpassung der Therapie häufig nicht fachgerecht durchgeführt wird und für den Patienten bei jeder Zeitverschiebung eine Unsicherheit in der Therapie besteht. Dies ist insbesondere bei Stoffwechselkrankheiten wie Diabetes nachteilig, bei denen die Gesundheit des Patienten essentiell von einer regelmäßigen Gabe von Therapeutika abhängt.

### ZUSAMMENFASSUNG DER ERFINDUNG

Der Erfindung liegt daher die Aufgabe zugrunde, die beschriebenen Nachteile beim Stand der Technik zu überwinden und eine Möglichkeit für den Patienten bzw. den behandelnden Arzt zu schaffen, ein bestehendes Behandlungsschema bei einer mit einer Zeitverschiebung verbunden Fernreise strukturiert und nachvollziehbar anzupassen.

Gelöst wird die Aufgabe durch das Verfahren gemäß Anspruch 1 und durch die Vorrichtung gemäß Anspruch 17.

Bevorzugte Weiterbildungen der Erfindung sind in den abhängigen Ansprüchen beschrieben.

Das erfindungsgemäße auf einem Computersystem ausführbare Verfahren zur Erstellung eines angepassten Reise-Behandlungsschemas zur Applikation eines Medikaments bei einer Femreise weist die Schritte auf: Erfassung eines stationären Behandlungsschemas zur Applikation des Medikaments, Erfassung von Start- und Zielort sowie Reisezeitpunkt der Fernreise, Bestimmung der Zeitzonendifferenz zwischen Start- und Zielort, und Erstellung eines angepassten Reise-Behandlungsschemas basierend auf dem stationären Behandlungsschema in Abhängigkeit von der Zeitzonendifferenz und dem Reisezeitpunkt. Dabei ist unter einem stationären Behandlungsschema das "normale" Behandlungsschema vor der Fernreise oder, nach einer Übergangszeit, nach der Fernreise zu verstehen. Ein Zusammenhang mit einer "stationären" Behandlung oder dergleichen besteht nicht. Unter einem Computersystem ist ein alleinstehender Computer, ein mit Prozessor und Speicher versehenes Endgerät wie etwa ein Mobiltelefon oder ein Zuckerkonzentrationsmessgerät oder ein vernetztes System mehrerer Computer zu verstehen.

Das erfindungsgemäße Verfahren liefert dem Patienten ein strukturiertes und nachvollziehbares Behandlungsschema zur Anwendung bei der Fernreise. Entsprechend der durch die Fernreise auftretenden Zeitzonendifferenz sowie dem jeweiligen Reisezeitpunkt wird ein individuelles Behandlungsschema für den Patienten auf Basis des stationären Behandlungsschemas erstellt. Der Patient bekommt klare Vorgaben zur Therapie in einem Zeitraum nach der durch die Fernreise erforderlich gewordenen Zeitumstellung.

Zur Erstellung des Reise-Behandlungsschemas wird vorzugsweise ein Satz von Reise-Behandlungsschemata in Abhängigkeit von einem Nicht-Applikationszeitraum zwischen einer letzten Applikation nach dem stationären Behandlungsschema unter Zugrundelegung der Ortszeit am Standort der Fernreise und der nächsten Applikation nach dem stationären Behandlungsschema unter Zugrundelegung der Ortszeit am Zielort bestimmt. Der Satz von Reise-Behandlungsschemata wird dabei vorzugsweise in einem Speicher abgespeichert und das jeweils anzuwendende Reise-Behandlungsschema auf Basis des bestimmten Nicht-Applikationszeitraumes ausgewählt.

Das erfindungsgemäße Verfahren ist vorteilhaft anwendbar für die Behandlung von Diabetikern. Dabei werden vorzugsweise Reise-Behandlungsschemata für alle bekannten Insulintypen und/oder blutzuckersenkenden Medikamenten erstellt, die in einem Startland und/oder Zielland der Reise zugelassen sind. Eine Aktualisierung der Behandlungsschemata auf Grund neu zugelassener Therapeutika oder neuer medizinischer Erkenntnisse ist dabei selbstverständlich möglich.

Bei der Berechnung der Zeitzonendifferenz werden vorzugsweise Sommerzeitregelungen mitberücksichtigt.

Start- und Zielort der Femreise kann vom Patienten selbst eingegeben werden oder aber über ein Satellitenkommunikationssystem bestimmt werden. Das erfindungsgemäße Verfahren kann auf einer Vorrichtung ausgeführt werden, die der Patient bei sich trägt. Alternativ ist es auch möglich, dass der Patient die erforderlichen Informationen wie das stationäre Behandlungsschema und die Reiseinformation über eine Kommunkationsverbindung einem zentralen Computer übermittelt, der das individuelle Behandlungsschema bestimmt und dieses dem Patienten zum Zugriff, beispielsweise über das Internet, zur Verfügung stellt. Zur Wahrung der Privatsphäre kann selbstverständlich ein Passwortschutz oder dergleichen vorgesehen sein.

Je nach zu behandelnder Krankheit deckt das Reise-Behandlungsschema einen festgelegten Übergangszeitraum nach dem Zeitpunkt der Zeitumstellung ab, welcher beispielsweise zwischen weniger als 1 Tag und bis zu 14 Tagen betragen kann. Im Falle der Diabetesbehandlung ist ein Zeitraum von 48 Stunden bevorzugt.

Die erfindungsgemäße Vorrichtung zur Erstellung eines angepassten Reise-Behandlungsschemas zur Applikation eines Medikaments bei einer Fernreise umfasst: eine Einrichtung zur Erfassung eines stationären Behandlungsschemas zur Applikation des Medikaments, eine Einrichtung zur Erstellung eines Satzes von Reise-Behandlungsschemata basierend auf dem stationären Behandlungsschema für verschiedene Zeitzonendifferenzen und Zeitpunkte der Zeitzonenumstellung, eine Speichereinrichtung zur Speicherung des Satzes angepasster Reise-Behandlungsschemata, eine Einrichtung zur Erfassung von Start- und Zielort der Fernreise, eine Einrichtung zur Bestimmung der Zeitzonendifferenz, eine Auswahleinrichtung zur Auswahl eines der gespeicherten Reise-Behandlungsschemata in Abhängigkeit von der Zeitzonendifferenz und dem Zeitpunkt der Zeitzonenumstellung, und eine Ausgabeeinrichtung zur Ausgabe des ausgewählten Behandlungsschemas.

### KURZBESCHREIBUNG DER ZEICHNUNGEN

Die Erfindung sowie weitere Aufgaben, Merkmale und Vorteile dieser werden im Folgenden anhand von bevorzugten Ausführungsbeispielen unter Bezugnahme auf die beiliegenden Zeichnungen im Detail erläutert, in denen
Fig. 1 eine schematische Darstellung eines Ausführungsbeispiels einer erfindungsgemäßen Vorrichtung zur Erstellung eines Reise-Behandlungsschemas ist;
Fig. 2 eine schematische Darstellung eines weiteren Ausführungsbeispiels einer erfindungsgemäßen Vorrichtung zur Erstellung eines Reise-Behandlungsschemas ist; und
Fig. 3 ein Flussdiagramm ist, das Verfahrensschritte des erfindungsgemäßen Verfahrens zur Erstellung eines angepassten Reise-Behandlungsschemas zeigt.

### DETAILLIERTE BESCHREIBUNG VON AUSFÜHRUNGSBEISPIELEN

Die Erfindung wird im Folgenden anhand bevorzugter Ausführungsbeispiele im Detail erläutert.

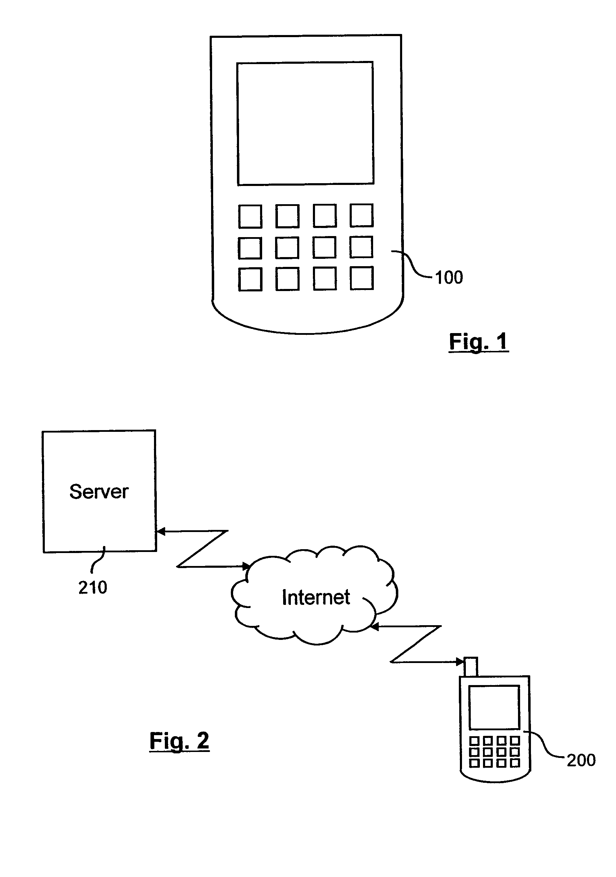

Fig. 1 zeigt schematisch ein Ausführungsbeispiel der erfindungsgemäßen Vorrichtung zur Erstellung eines Reise-Behandlungsschemas. Die Vorrichtung ist vorzugsweise in kompakter Bauweise gehalten, dass sie der Patient bei Reisen bequem bei sich tragen kann und weist eine Eingabeeinrichtung wie etwa eine Tastatur zur Eingabe seines individuellen stationären Behandlungsschemas (siehe Beschreibung weiter unten) sowie zur Eingabe der Abflugzeit und der Ankunftszeit der Fernreise auf. Aufgrund dieser Daten sowie dem erfassten Reisezeitpunkt, genauer gesagt dem Zeitpunkt der Zeitumstellung, ermittelt die Vorrichtung 100 ein abgewandeltes Reise-Behandlungsschema zur Anpassung der Therapie an die durch die Fernreise verursachte Zeitumstellung. Die Art und Weise der Berechnung des Reise-Behandlungsschemas wird später anhand von Beispielen im Detail erläutert. Eine Ausgabeeinrichtung wie ein Bildschirm oder ein Druckwerk dient der Ausgabe des Reise-Behandlungsschemas für den Benutzer/Patienten. Es kann auch vorgesehen sein, dass die Vorrichtung 100 optische oder akustische Wamsignale abgibt, die den Benutzer an eine fällige Behandlung etwa mit Insulin erinnem. Die Vorrichtung 100 kann in einem mobilen Endgerät wie einem Laptop-Computer, einem elektronischen Organizer oder einem Mobiltelefon integriert sein.

Fig. 2 zeigt ein weiteres Ausführungsbeispiel der erfindungsgemäßen Vorrichtung. Bei diesem Ausführungsbeispiel ist ein Endgerät 200 mit Eingabe- und Ausgabeeinrichtungen über ein Kommunikationsnetzwerk wie das Internet mit einem Server 200 verbunden. Der Benutzer gibt dabei die Reisedaten sowie sein stationäres Behandlungsschema ein, welche Daten dann über das Internet zum Server-Computer 210 übertragen werden. Dieser ermittelt dann das zugehörige individuelle Reise-Behandlungsschema, welches dann über das Internet dem Benutzer-Endgerät 200 zur Ausgabe übermittelt wird. Das Ausführungsbeispiel von Fig. 2 hat den Vorteil, dass Anpassungen an neu zugelassene Medikamente wie etwa neue Insulintypen einfacher vorgenommen werden können. Es ist außerdem leicht möglich, die angepassten Reise-Behandlungsschemata an die neuesten medizinischen Erkenntnisse anzupassen.

Das erfindungsgemäße Verfahren kann vorteilhaft in ein persönliches Zeitplanungsprogramm (Personal Information Manager, PIM) integriert werden, etwa Microsoft Outlook oder Lotus Notes. Das Reise-Behandlungsschema wird dann in die persönliche, rechnergestütze Zeitplanung des Benutzers integriert.

Anstatt Abflugs- und Ankunftsort manuell einzugeben ist es alternativ auch möglich, eine Positionsbestimmung des Endgeräts 100 oder 200 über ein Satellitennavigationssystem (GPS) durchzuführen. Für den Benutzer ist es dann ausreichend, einmal sein stationäres Behandlungsschema in das Endgerät 200 einzugeben, das laufend die aktuelle Ortsposition des Geräts (und wenn der Benutzer bei sich trägt, des Benutzers) überprüft und ein Warnsignal abgibt, sobald die Zeitverschiebung einen Wert erreicht hat, der eine Anpassung des Behandlungsschemas erforderlich macht. Der Benutzer braucht dann nur einen Knopf zu drücken, woraufhin über eine eingebaute Uhr der Zeitumstellungszeitpunkt bestimmt wird und das angepasste individuelle Reise-Behandlungsschema bestimmt und am Bildschirm ausgegeben wird.

Alternativ ist es weiterhin möglich, ohne ein spezielles Benutzerendgerät auszukommen. Der Benutzer kann sein stationäres Behandlungsschema passwortgeschützt auf einem Server hinterlassen. Sobald er auf Reisen ist, kann er von einem beliebigen interneffähigen Computer oder dergleichen über das Internet unter Eingabe seines Passworts auf die auf dem Server abgespeicherten Informationen zugreifen und die Reisedaten eingeben, woraufhin dem Benutzer das angepasste Reise-Behandlungsschema per Internet vermittelt wird.

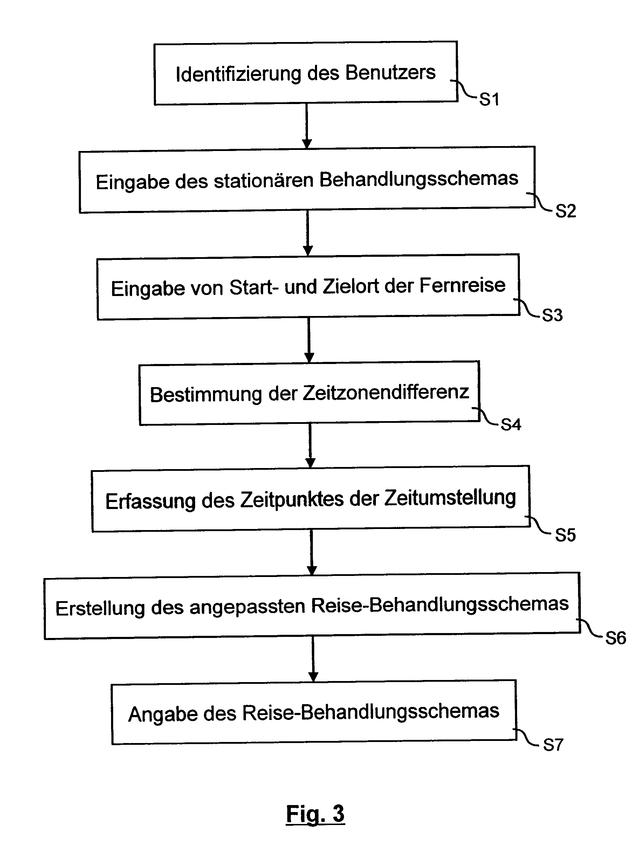

Fig. 3 zeigt in Form eines Flussdiagramms die Verfahrensschritte zur Berechnung des angepassten Reise-Behandlungsschemas.

In Schritt S1 identifiziert sich der Benutzer durch einen Namen, Passwort etc. Daraufhin gibt er sein stationäres Behandlungsschema ein, d.h. seine persönlichen regelmäßigen Medikamentenapplikationen. In Schritt S3 wird durch den Benutzer Start- und Zielort der Fernreise eingegeben, was, wie oben erläutert, auf verschiedene Art und Weise erfolgen kann. Daraufhin bestimmt das erfindungsgemäße Verfahren die Zeitzonendifferenz in Schritt S4 und weiterhin den Zeitpunkt der Zeitumstellung (Schritt S5). Aufgrund dieser Informationen wird auf Basis des eingegebenen stationären Behandlungsschemas in Verfahrensschritt S6 das angepasste Reise-Behandlungsschema erstellt, das in Verfahrensschritt S7 über einen Bildschirm, einen Drucker oder dergleichen für den Benutzer ausgegeben wird.

Das Verfahren zur Bestimmung des angepassten Reise-Behandlungsschemas wird im Folgenden im Einzelnen anhand des Beispielfalles einer Diabetestherapie erläutert.

Die Erfindung ist anwendbar auf alle Abflugzeiten und Abflugsorte aller Zeitzonen sowie alle Ankunftszeiten und Ankunftsorte aller Zeitzonen. Hinterlegt werden die Ortszeiten der größten Orte mit Flughäfen aller Länder und Zeitzonen. Die Ortszeiten werden beispielsweise auf die Westeuropäische Zeit (Universal Time Coordinate (UTC)) bezogen und sind entsprechend der vorliegenden Sommerzeit und Winterzeit und bezogen auf das jeweilige Datum abrufbar.

Das Ausführungsbeispiel ist für alle Formen und Schemata heutiger und zukünftiger Insulintherapien konzipiert und ist anwendbar für die subkutane, intraperitoneale, intravenöse und inhalative Insulintherapie sowie allen weiteren denkbaren Behandlungsformen für Diabetes, auch nicht auf Basis von Insulin. Es umfasst alle Behandlungsmöglichkeiten mit blutzuckersenkenden Tabletten. Alle Therapeutika, die in einem Land zugelassen sind, werden in einer Speichereinrichtung hinterlegt (alle Insuline, und sonstige blutzuckersenkenden Medikamente).

Das Verfahren ist so konzipiert, dass der Diabetiker neben den Reisedaten die individuelle Behandlungsform auswählt, die jeweils tagesbezogenen Insulin- bzw. Tablettendosen eingibt, und basierend auf einem Regelwerk eine Empfehlung für die Anpassung der Therapie in Abhängigkeit von der Richtung und dem Ausmaß der Zeitverschiebung für die Zeit während der Reise bestimmt wird. Das Verfahren trägt damit dazu bei, die Stoffwechsellage von Diabetikern zu optimieren und beugt Stoffwechselentgleisungen durch eine fachgerechte und strukturierte Anpassung der Therapie vor.

Die Erfindung kann dabei neben der Erstellung von Reise-Behandlungsschemata für die Abgabe von Insulinen und/oder blutzuckersenkenden Medikamenten auch Empfehlungen für die Nahrungsaufnahme, insbesondere von Kohlenhydraten umfassen. Dabei werden die empfohlenen Kohlehydratmengen vorzugsweise in Broteinheiten (BE) angegeben bzw. die tatsächlich verzehrte Kohlehydratmenge durch den Benutzer eingegeben.

Das angepasste Reise-Behandlungsschema kann auch bei jeglicher Art und Applikation einer kontinuierlichen blutzuckersenkenden Therapie mit Insulin durch Insulindosiergeräte (Insulinpumpen) Anwendung finden. Diese Behandlungsform basiert auf einer kontinuierlichen Insulinapplikation gemäß einer programmierten Basalrate, die sich nach dem tageszeitlich abhängigen Insulinbedarf des Patienten richtet (jeweils x Einheiten pro Stunde, z. B. 0,6 E/h von 0 - 3 Uhr, 1,1 E/h von 3 - 8 Uhr, 0,8 E/h von 8 - 14 Uhr, 0,7 E/h von 14 - 20 Uhr, 0,8 E/h von 20 - 0 Uhr). Sie wird daher individuell festgelegt und bildet die täglich wiederkehrende Konstante der Therapie. Daneben wird Mahlzeiten-bezogen Insulin zur Abdeckung der zugeführten Menge der Kohlehydrate abgerufen.

Beim Reise-Behandlungsschema wird die Basalrate über einen definierten Zeitraum (bis zu 10 Tagen) strukturiert der Zeitverschiebung angepasst. So wird z. B. bei einer Zeitverschiebung von 6 Stunden in östlicher Richtung die Basalrate des Insulins täglich um eine Stunde vorgeschoben, bis sie nach 6 Tagen exakt an die neue Zeit angepasst ist. Bei einer Zeitverschiebung von 12 Stunden in westlicher Richtung wird sie z. B. täglich um 2 Stunden zurückverschoben und ist dann nach 6 Tagen angepasst. Sie kann z. B. auch täglich um 4 Stunden zurückverschoben werden und ist dann nach 3 Tagen angepasst oder täglich um 6 Stunden zurückverschoben werden und ist dann nach 2 Tagen angepasst Das Ausmaß der täglichen Anpassung ist variabel und kann selbst gewählt werden.

Die Mahlzeiten-bezogene Insulinabgabe (Insulin-Bolus) wird durch die entsprechenden Therapieschemata des Reise-Behandlunsschema geregelt (z. B. Insulin 1-1-1-0).

Das erfindungsgemäße Verfahren kann auch die Messung eines tatsächlichen Blutzuckerwertes eines Benutzers/Patienten mit umfassen und den so ermittelten Wert für das Behandlungsschema mit berücksichtigen. Die Erfassung des Blutzukkerwertes kann dabei durch den Patienten mit einem separaten Gerät erfolgen und durch diesen dann manuell eingegeben werden. Es ist jedoch auch möglich, dass die Erfindung in ein Gerät zur Blutzuckermessung integriert wird. Erfindungsgemäß kann der Blutzuckerspiegel auch durch nicht-invasive Methoden oder Glukosesensoren kontinuierlich gemessen werden, wobei auch indirekte Messverfahren etwa mittels Infrarotstrahlen zur Anwendung kommen können, die auf der Messung einer Zuckerkonzentration in anderen Körperflüssigkeiten beruhen.

### Klassen der hinterlegten Medikamente

Es werden alle blutzuckersenkenden Medikamente, die in Deutschland zugelassen sind, hinterlegt. Die Daten werden ständig aktualisiert und zeitnah bei Zulassung neuer Medikamente aktualisiert. Die Medikamente werden nach Ihrem Wirkungsprofil klassifiziert und Medikamente mit gleichem Wirkungsprofil in jeweils einer Gruppe zusammengefasst. Die Gruppen werden bei den Therapieschemata, zu den sie passen, hinterlegt und können dort aufgerufen werden.

### Insuline

Die Insuline werden nach Ihrem Wirkungsprofil klassifiziert und je nach Wirkungsdauer in fünf verschiedene Gruppen von Insulinen (I1-I5) aufgeteilt. Sollten neue Insuline zugelassen werden, die in keine der erwähnten Gruppen klassifiziert werden können, wird eine neue Gruppe zur Hinterlegung gebildet.

| | | Gruppe |
|---|---|---|
| 1 | Kurzwirksame Humaninsuline | I1 |
| 2 | Modifizierte kurzwirksame Insuline | I2 |
| 3 | Intermediär, max. 12 h wirksame Misch-Insuline | I3 |
| 4 | Intermediär, max. 12 h wirksame Basal-Insuline | I4 |
| 5 | Intermediär, max. 24 h wirksame Insuline | I5 |

Es können aber auch Gruppen von anderer Wirkungsdauer als den angegebenen gebildet werden (längere oder kürzere Wirkungsdauer als I1 - I5).

### Blutzuckersenkende Tabletten

Blutzuckersenkende Tabletten (Orale Antidiabetika) werden nach Ihrem Wirkungsmechanismus in 8 Gruppen zusammengefasst. Sollten neue blutzuckersenkende Medikamente zugelassen werden, die in keine der erwähnten Gruppen klassifiziert werden können, wird eine neue Gruppe zur Hinterlegung gebildet.

| | | Gruppe |
|---|---|---|
| 1 | Alpha-Glucosidase-Hemmer | T1 |
| 2 | Mefformin | T2 |
| 3 | Glibenclamid | T3 |
| 4 | Tolbutamid | T4 |
| 5 | Glimepirid | T5 |
| 6 | Andere Sulfonylharnstoffderivate | T6 |
| 7 | Prandiale Glucoseregulatoren | T7 |
| 8 | Glitazone | T8 |

### Therapieschemata

In einer Speichereinrichtung werden alle Behandlungsschemata für Diabetiker hinterlegt. Jedem Behandlungsschema werden die zugehörigen Gruppen von Medikamenten zugeordnet. Die Schemata basieren darauf, dass Insuline zu festen Zeiten gespritzt und blutzuckersenkende Tabletten zu festen Zeiten eingenommen werden und berücksichtigen, dass die innerhalb der Gruppen von Insulinen und blutzuckersenkenden Tabletten ein gleiches Wirkungsschema besteht.

### Schemata der Insulintherapie

Insulin wird zu festgelegten Zeiten (morgens, mittags, abends, spät) gespritzt. Gekoppelt daran ist die Einnahme von Mahlzeiten (morgens, mittags, abends, spät keine Mahlzeit)

Zeitraum Uhrzeit Abk. Insulin Mahlzeit Abk. Mahlzeit

| | | | | |
|---|---|---|---|---|
| Morgens | 7 | IF | Fnihstück | F |
| Mittags | 13 | IM | Mittagessen | M |
| Abends | 19 | IA | Abendessen | A |
| Spät | 22 | IS | keine Mahlzeit | - |

Da Diabetiker nicht immer exakt zu diesen Zeiten Insulin spritzen, wird ein Zeitraum zur Insulinapplikation, aus dem der Diabetiker seinen individuellen Zeitpunkt der Insulininjektion auswählen kann, vorgegeben: Morgens 6:00 - 8:00 Uhr, mittags 12:00 - 14:00 Uhr, abends 18:00 - 20:00 Uhr, spät 21:00 - 23:00 Uhr. Um eine konstanten Zeitpunkt für die Berechnung zu erhalten, bezieht sich die Insulininjektion auf die im Schema festgelegten Uhrzeiten (7:00, 13:00, 19:00, 22:00 Uhr).

Das erfindungsgemäße Verfahren errechnet gegebenenfalls notwendig werdende zusätzliche Insulininjektionen, die gegebenenfalls an zusätzliche Zwischenmahlzeiten gekoppelt sind.

| | | |
|---|---|---|
| Zeitraum Uhrzeit Abk. Insulin | Mahlzeit | Abk. Mahlzeit |
| Variabel Variabel IZ | Zwischenmahlzeit | Z |

### Schemata der Insuline

Die Zeitpunkte werden über den Zustände 0 (nein) und 1 (ja) definiert:
Beispiele: Insulin morgens, mittags, abends, spät
   1-1-1-1
   Insulin morgens, kein Insulin mittags, Insulin abends, kein Insulin spät
   1-0-1-0

Für jedes Schema einer Insulintherapie werden entsprechende Insulingruppen hinterlegt. Jedes Schema einer Insulintherapie erhält durch Hinterlegung verschiedener Insulingruppen verschiedene Varianten. Für jede Variante jedes Insulinschemas wird ein Regelwerk für alle Zeitverschiebungen in östlicher und westlicher Richtung definiert, aus dem strukturiert Therapieänderungen für die Zeitverschiebung errechnet werden.

Kombinationen aus gleichen oder verschiedenen Insulinschemata und gleichen oder verschiedenen Varianten mit gleicher oder unterschiedlicher Hinterlegung von Insulingruppen sind möglich. Alle Insulinschemata werden mit allen Varianten integriert.

### Insulin 1x täglich

Mögliche Zeitpunkte: Morgens, mittags, abends, spät

| Variante | Insulin | Hinterlegte Insulingruppen |
|---|---|---|
| a | 1-0-0-0 | I1, I2, I3, I4, I5 |
| b | 0-1-0-0 | I1, I2, I3, I4, I5 |
| c | 0-0-1-0 | I1, I2, I3, I4, I5 |
| d | 0-0-0-1 | I1, I2, I3, I4, I5 |

### Insulin 2x täglich

Mögliche Zeitpunkte: Morgens, mittags, abends, spät

| Variante Insulin | Hinterlegte Insulingruppen | |
|---|---|---|
| a | 1-1-0-0 | I1, I2, I3, I4, I5 |
| b | 1-0-1-0 | I1, I2, I3, I4, I5 |
| c | 1-0-0-1 | I1, I2, I3, I4, 15 |
| d | 0-1-0-1 | I1, I2, I3, I4, I5 |
| e | 0-0-1-1 | I1, I2, I3, I4, 15 |
| f | 0-1-1-0 | I1, I2, I3, I4, 15 |

### Insulin 3x täglich

Mögliche Zeitpunkte: Morgens, mittags, abends, spät

| Variante | Insulin | Hinterlegte Insulingruppen |
|---|---|---|
| a | 1-1-1-0 | I1, I2, I3, I4, I5 |
| b | 1-0-1-1 -1 | I1, I2, I3, I4, I5 |
| c | 0-1-1-1 | I1, I2, I3, I4, I5 |
| d | 1-1-0-1 | I1, I2, I3, I4, I5 |

### Insulin 4x täglich

Mögliche Zeitpunkte: Morgens, mittags, abends, spät

| Variante | Insulin | Hinterlegte Insulingruppen |
|---|---|---|
| a | 1-1-1-1 | I1, I2, I3, I4, I5 |

### Insulin > 4x täglich

Zeitpunkte: Morgens, mittags, abends, späte und zusätzlich alle anderen Zeitpunkte

| | Hinterlegte Insulingruppen |
|---|---|
| | I1, I2, I3, I4, I5 |
| Insulinpumpentherapie | Hinterlegte Insulingruppen |

### Schemata der Therapie mit blutzuckersenkenden Tabletten

Tabletten werden zu festgelegten Zeiten (morgens, mittags, abends, spät) eingenommen. Gekoppelt daran ist die Einnahme von Mahlzeiten (morgens, mittags, abends, spät keine Mahlzeit).

| Zeitraum | Uhrzeit | Abk. Tablette | Mahlzeit | Abk. Mahlzeit |
|---|---|---|---|---|
| Morgens | 7 | TF | Frühstück | F |
| Mittags | 13 | TM | Mittagessen | M |
| Abends | 19 | TA | Abendessen | A |
| Spät | 22 | TS | keine Mahlzeit | - |

Da Diabetiker nicht immer exakt Tabletten zu diesen Zeiten einnehmen, wird ein Zeitraum zur Einnahme, aus dem der Diabetiker den individuellen Zeitpunkt der Einnahme auswählen kann, vorgegeben: Morgens 6:00 - 8:00 Uhr, mittags 12:00 - 14:00 Uhr, abends 18:00 - 20:00 Uhr, spät 21:00 - 23:00 Uhr. Um einen konstanten Zeitpunkt für die Berechnung zu erhalten, bezieht sich die Einnahme auf die im Schema festgelegten Uhrzeiten (7:00, 13:00, 19:00, 22:00 Uhr).

Das Verfahren errechnet gegebenenfalls notwendig werdende zusätzliche Einnahmen von Tabletten, die gegebenenfalls an Zwischenmahlzeiten gekoppelt sind.

| | | |
|---|---|---|
| Zeitraum Uhrzeit Abk. Tablette | Mahlzeit | Abk. Mahlzeit |
| Variabel Variabel TZ | Zwischenmahlzeit | Z |

### Schemata der Therapie mit Tabletten

Die Zeitpunkte werden über den Zustände 0 (nein) und 1 (ja) definiert:
Beispiele: Tablette morgens, mittags, abends, spät
   1-1-1-1
   Tablette morgens, keine Tablette mittags, Tablette abends, spät keine Tablette
   1-0-1-0

Für jedes Schema einer Therapie mit blutzuckersenkenden Tabletten werden entsprechende Tablettengruppen hinterlegt. Jedes Schema einer Therapie mit blutzuckersenkenden Tabletten erhält durch Hinterlegung verschiedener Gruppen von Tabletten verschiedene Varianten. Für jede Variante jedes Schemas einer Therapie mit blutzuckersenkenden Tabletten wird ein Regelwerk für alle Zeitverschiebungen in östlicher und westlicher Richtung definiert, aus dem strukturiert Therapieänderungen für die Zeitverschiebung errechnet werden.

Bei Einnahme von verschiedenen blutzuckersenkenden Tabletten sind alle Kombinationen (jeweils Tablette 1 - 4 x täglich) von Varianten auf gleiche Art und Weise wie bei der Insulintherapie möglich.

### Die Anpassung der Diabetestherapie bei Zeitverschiebung

Für jedes Behandlungsschema und jede hinterlegte Medikamentegruppe werden Zeitachsen für alle Zeitverschiebungen in einer Excel-Tabelle hinterlegt (Zeitverlauf). Eine Tabelle enthält in einer Zeile eine Zeitachse der bisherigen Zeit" Zeit alt" und auf darunter liegenden Zeilen, bezogen auf "Zeit alt", alle möglichen Zeitachsen der Zeitverschiebung ("Zeit neu").

Für jedes Behandlungsschema und jede hinterlegte Medikamentegruppe wird ein eigenes Regelwerk in einer weiteren Excel-Tabelle aufgestellt. Es ist abhängig von der Häufigkeit der Einnahme und der jeweiligen Medikamentegruppe, sowie nach der bisherigen auch tageszeitlich bezogenen Dosierung.

Ein auf die Medikamentegruppe bezogenes Regelwerk ist notwendig, da jede Medikamentegruppe mit den zugehörigen Medikamenten ein bestimmtes für sie charakteristisches Wirkungsprofil hat, das ein Regelwerk erfordert.

Die Errechnung der Anpassung der Behandlung bei Zeitverschiebung basiert auf folgenden Angaben:
a) Es werden Abflugzeit und Abflugort und Ankunftszeit und Ankunftsort jeweils mit Datum eingegeben. Aus diesen Daten berechnet das Programm die Zeitverschiebung in Stunden sowie deren Richtung (1h-12h, westlich oder östlich).
b) Es werden das bisherige Behandlungsschema oder die bisherigen Behandlungsschemata eingegeben. Dadurch werden der bisherige Zeitpunkt oder die bisherigen Zeitpunkte der Einnahme festgelegt.
c) Es folgt die Auswahl des bisheriges Medikaments oder der bisherigen Medikamente bezogen auf das Behandlungsschema oder die Behandlungsschemata.
d) Es werden die bisherige Insulin-Dosis oder die bisherigen Insulindosen in Insulineinheiten (IU,E) und/ oder die bisherige Anzahl der Tabletten eingegeben.

Aus den Angaben a) - d) wird die zugehörige Excel-Tabelle des Zeitverlaufs ausgewählt, und es werden in diese die eingegebenen Daten integriert. Die Tabelle Zeitverlauf dient als Unterstützung zur Bestimmung des zugehörigen Regelwerks. Die Berechnung des Regelwerks über die Tabelle Zeitverlauf basiert auf folgendem Vorgehen:
a) Für die Berechnung ist der Zeitpunkt der Umstellung der Zeit entscheidend. In der Regel ist dies der Zeitpunkt des Ankunft. Das heißt, dass während des Fluges "Zeit alt" mit dem entsprechenden Schema gilt. Bei Ankunftszeit wird je nach Ort, d.h. je nach Zeitverschiebung in der Exceltabelle die entsprechende "Zeit neu" herangezogen. Auf ihr ist das bisherige Behandlungsschema hinterlegt, nur eben zeitverschoben. Es besteht auch die Möglichkeit zu planen, die Zeit bereits während des Fluges umzustellen. Für das Vorgehen bei der Berechnung ändert sich dadurch nichts.
b) Für die Berechnung der Anpassung wird folgender Bezug hergestellt: Es wird der Zeitraum in Stunden zwischen der letzten Medikamente-Einnahme auf Zeitachse "Zeit alt" und der vorgesehenen nächsten Medikamente-Einnahme auf Zeitachse "Zeit neu" errechnet. Er setzt sich zusammen aus:
   Ankunftszeit (bei Umstellung der Zeit bei der Ankunft) minus Zeitpunkt der letzten Medikamente-Einnahme = x (h)
   Zeitpunkt der nächsten vorgesehenen Medikamente-Einnahme minus Ankunftszeit (bei Umstellung der Zeit bei der Ankunft) = y (h)
   x (h) plus y (h) = Zeitraum (h) zwischen letzter und nächster vorgesehener Medikamente-Einnahme

Aus dem Zeitraum (h) zwischen letzter und nächster vorgesehener Medikamente-Einnahme ergibt sich aus dem hinterlegten Regelwerk die Anpassung der Therapie. Für jeden Zeitraum (h) zwischen letzter und nächster vorgesehener Medikamente-Einnahme, der bei dem entsprechenden Behandlungsschema möglich ist, gilt eine spezifische Regel, die im Regelwerk ersichtlich ist. Diese ist direkt abhängig von dem errechneten Zeitraum (h) zwischen letzter und nächster vorgesehener Medikamente-Einnahme.

Entsprechend der hinterlegten Regel wird eine Behandlungsempfehlung für die folgenden 48 h nach dem Zeitpunkt der Ankunft gegeben.
Diese kann darin bestehen, dass die Behandlung a) unverändert fortgesetzt wird, b) die Dosis der Medikamente-Einnahme verändert und Zeitpunkt sowie Mahlzeit beibehalten werden, c) ein Auslassen einer vorgesehenen Medikamente-Einnahme und Mahlzeit erfolgt, d) eine zusätzliche Medikamente-Einnahme mit unveränderter Dosis und zusätzlicher Mahlzeit erfolgt oder e) eine zusätzliche Medikamente-Einnahme mit veränderter Dosis sowie zusätzliche Mahlzeit erfolgt. Kombinationen von a, b, c, d und e sind möglich.

Die Erfindung ermöglicht so, ein strukturiertes und nachvollziehbares Behandlungsschema für den Patienten zu erstellen, das dieser auf einfache Art und Weise abrufen und anwenden kann. Unsicherheiten bezüglich der richtigen Therapie auf einer Fernreise können so vermieden und die Lebensqualität des Patienten erheblich verbessert werden.

Die Erfindung ist nicht auf die Anwendung zur Behandlung von Diabetes beschränkt. Weitere Anwendungsbeispiele sind etwa die Behandlung von Blutdruckkrankheiten (Hypertonie, Hypotonie) oder die regelmäßige Verabreichung von blutverdünnenden Therapeutika wie Marcumar oder Acetylsalicylsäure.

Als Anhänge 1 bis 3 sind Beispiele für Reise-Behandlungsschemata für Flugreisen München-New York, Frankfurt-Tokio und Mexiko-London Heathrow angegeben.

### Anhang 1

### Beispiel : München - New York

1.)
a)
Abflug Ort: München (MUC) Zeit: 11:30 Uhr Datum: 13.11.00
Ankunft Ort: New York (NYC)Zeit: 15:00 Uhr Ankunft: 13.11.00
b)

| | | | | |
|---|---|---|---|---|
| Behandlungsschema | früh | mittags | abends | spät |
| | 07:00 | 13:00 | 19:00 | 22:00 |
| Insulin | X | - | X | - |

c.)

| | | |
|---|---|---|
| Dosierung | früh | abends |
| | 07:00 | 19:00 |
| Name des Insulins Misch-Insulin | 20 E | 10 E |

2.)
Berechnung wie im Zeitverlauf ersichtlich
Siehe Anlage Zeitverlauf MUC - NYC

3.)
Erstellung des Behandlungsvorschlags über Regelwerk:

| | | | | |
|---|---|---|---|---|
| Regelwerk | West | | | |
| Schema | 1-0-1-0 | | | |
| Insulin | IFIA | | | |
| Insulingruppe | I2 | | | |
| IA nach IA wenn | dann | | | |
| Zwischen letztem | | | | |
| IF und nächstem | | | Nächste Mahlzeit | Zeit Insulin und Mahlzeit |
| IF X Stunden | Nächstes Insulin | Menge Insulin | | |
| | 1kein IA | | kein A | |
| | 2kein IA | | kein A | |
| | 3kein IA | | kein A | |
| | 4Nächstes IA | IA*0,33 | A | |
| | 5Nächstes IA | IA*0,41 | A | |
| | 6Nächstes IA | IA*0,5 | A | |
| | 7Nächstes IA | IA*0,58 | A | |
| | 8Nächstes IA | IA*0,66 | A | |
| | 9Nächstes IA | IA*0,75 | A | |
| | 10Nächstes IA | IA*0,83 | A | |
| | 11 Nächstes IA | IA*0,91 | A | |
| | 12 | | | |
| | 13 | | | |
| | 14 | | | |
| | 15 | | | |
| | 16 | | | |
| | 17 | | | |
| | 18 | | | |
| | 19 | | | |
| | 20 | | | |
| | 21 | | | |
| | 22 | | | |
| | 23 | | | |
| | 24 | | | |
| | 25 | | | |
| | 26 | | | |
| | 27 | | | |
| | 28 | | | |
| | 29 | | | |
| | 30 | | | |
| | 31 | | | |
| | 32 | | | |
| | 33 | | | |
| | 34 | | | |
| | 35 | | | |
| | 36 | | | |
| | 37 | | | |
| | 38 | | | |
| | 39 | | | |
| | 40 | | | |
| | 41 | | | |
| | 42 | | | |
| | 43 | | | |
| | 44 | | | |
| | 45 | | | |
| | 46 | | | |
| | 47 | | | |

4.)
Empfehlung zur Therapie nach Ankunft

| 13.11.00 | | | |
|---|---|---|---|
| Ankunft | Ort: New York | Zeit: 15:00 Uhr | Ankunft: 13.11.00 |
| Dosierung | | | abends |
| | | | 19:00 |
| Name des Insulins | | | 4 E |
| Abendessen | | | X |

| 14.11.00 | | | |
|---|---|---|---|
| Dosierung | früh | | abends |
| | 07:00 | | 19:00 |
| Name des Insulins | 20 E | | 10 E |
| Frühstück | X | | |
| Abendessen | | | X |

### Anhang 2

Beispiel: Frankfurt - Tokio
1.)
a)
Abflug Ort: Frankfurt (FRA) Zeit: 10:55 Uhr Datum: 11.11.00
Ankunft Ort: Tokio (TYO) Zeit: 08:40 Uhr Ankunft: 12.11.00
b)

| | | | | |
|---|---|---|---|---|
| Behandlungsschema | früh | mittags | abends | spät |
| | 07:00 | 13:00 | 19:00 | 22:00 |
| Insulin | X | - | - | - |

c.)

| | |
|---|---|
| Dosierung | früh |
| | 07:00 |
| Name des Insulins: | |
| Misch-Insulin | 10 E |

2.)
Berechnung wie im Zeitverlauf ersichtlich
Siehe Anlage Zeitverlauf FRA-TYO

3.)
Erstellung des Behandlungsvorschlags über Regelwerk:

| | | | | |
|---|---|---|---|---|
| Regelwerk | Ost | | | |
| Schema | 1-0-0-0 | | | |
| Insulin | IF | | | |
| Insulingruppe | I2 | | | |
| IF nach IF wenn | dann | | | |
| Zwischem letztem | | | | |
| IF und nächstem | | | | |
| IF X Stunden | Nächstes Insulin | Menge Insulin | Nächste Mahlzeit | Zeit Insulin und Mahlzeit |
| | 1 | | | |
| | 2 | | | |
| | 3 | | | |
| | 4 | | | |
| | 5 | | | |
| | 6 | | | |
| | 7 | | | |
| | 8 | | | |
| | 9 | | | |
| | 10 | | | |
| | 11 | | | |
| | 12IF | IF*1,0 | F | |
| | 13IF | IF*1,0 | F | |
| | 14IF | IF*1,0 | F | |
| | 15IF | IF*1,0 | F | |
| | 16IF | IF*1,0 | F | |
| | 17IF | IF*1,0 | F | |
| | 18IF | IF*1,0 | F | |
| | 19IF | IF*1,0 | F | |
| | 20IF | IF*1,0 | F | |
| | 21IF | IF*1,0 | F | |
| | 221F | IF*1,0 | F | |
| | 231F | IF*1,0 | F | |
| | 24 | | | |
| | 25 | | | |
| | 26 | | | |
| | 27 | | | |
| | 28 | | | |
| | 29 | | | |
| | 30 | | | |
| | 31 | | | |
| | 32 | | | |
| | 33 | | | |
| | 34 | | | |
| | 35 | | | |
| | 36IZ | IF*0,5 | Z | nächstes IF - 12h |
| | 37IZ | IF*0,58 | Z | nächstes IF - 13h |
| | 381Z | IF*0,66 | Z | nächstes IF - 14h |
| | 39IZ | IF*0,75 | Z | nächstes IF - 15h |
| | 40IZ | IF*0,83 | Z | nächstes IF - 16h |
| | 41IZ | IF*0,91 | Z | nächstes IF - 17h |
| | 42IZ | IF*1,0 | Z | nächstes IF - 18h |
| | 43IZ | IF*1,0 | Z | nächstes IF - 19h |
| | 44IZ | IF*1,0 | Z | nächstes IF - 20h |
| | 45IZ | IF*1,0 | Z | nächstes IF-21h |
| | 46IZ | IF*1,0 | Z | nächstes IF - 22h |
| | 47IZ | IF*1,0 | Z | nächstes IF - 23h |

4.)
Empfehlung zur Therapie nach Ankunft

| 12.11.00 | | | |
|---|---|---|---|
| Ankunft | Ort: Tokio | Zeit: 08:40 Uhr | Ankunft: 12.11.00 |
| Dosierung | | Zusätzlich | |
| | | 16:00 | |
| Misch-Insulin | | 8 E | |
| Zwischenmahlzeit | | X | |

| 13.11.00 | | | |
|---|---|---|---|
| Dosierung | früh | | |
| | 07:00 | | |
| Misch-Insulin | 10 E | | |
| Frühstück | X | | |

### Anhang 3

Beispiel : Mexico Stadt - London Heathrow
1.)
a)

| | | |
|---|---|---|
| Abflug | | |
| Ort: Mexico Stadt (MEX) | Zeit: 23:55 Uhr | Datum: 14.11.00 |
| Ankunft | | |
| Ort: London Heathrow (LHR) | Zeit: 17:35 Uhr | Ankunft: 15.11.00 |

b)

| | | | | |
|---|---|---|---|---|
| Behandlungsschema | früh | mittags | abends | spät |
| | 07:00 | 13:00 | 19:00 | 22:00 |
| Insulin | - | - | - | X |
| Tabletten | X | | | |

c.)

| | | |
|---|---|---|
| Dosierung | | spät 22:00 |
| Name des Insulins | | |
| Basal-Insulin | | 30 E |
| | Früh | |
| | 07:00 | |
| Name der Tablette | | |
| Glibenclamid | 1 (Anzahl) | |

2.)
Berechnung wie im Zeitverlauf ersichtlich
Siehe Anlage Zeitverlauf MEX - LHR
3.)
Erstellung des Behandlungsvorschlags über Regelwerk:

| | | | | |
|---|---|---|---|---|
| Regelwerk | Ost | | | |
| Schema | 0-0-0-1 | | | |
| Hinterlegung | IF | | | |
| Insulingruppe | I3 | | | |
| IS nach IS | | | | |
| wenn | dann | | | |
| Zwischem letztem IS und nächstem IS X | | | | |
| Stunden | Nächstes Insulin | Menge Insulin | Nächste Mahlzeit | Zeit Insulin und Mahlzeit |
| | 1 | | | |
| | 2 | | | |
| | 3 | | | |
| | 4 | | | |
| | 5 | | | |
| | 6 | | | |
| | 7 | | | |
| | 8 | | | |
| | 9 | | | |
| | 10 | | | |
| | 11 | | | |
| | 12IS | IS*1,0 | IS | |
| | 13IS | IS*1,0 | IS | |
| | 14IS | IS*1,0 | IS | |
| | 15IS | IS*1,0 | IS | |
| | 16IS | IS*1,0 | IS | |
| | 17IS | IS*1,0 | IS | |
| | 18IS | IS*1,0 | IS | |
| | 19IS | IS*1,0 | IS | |
| | 20IS | IS*1,0 | IS | |
| | 21IS | IS*1,0 | IS | |
| | 22IS | IS*1,0 | IS | |
| | 23IS | IS*1,0 | IS | |
| | 24 | | | |
| | 25 | | | |
| | 26 | | | |
| | 27 | | | |
| | 28 | | | |
| | 29 | | | |
| | 30 | | | |
| | 31 | | | |
| | 32 | | | |
| | 33 | | | |
| | 34 | | | |
| | 35 | | | |
| | 36IZ | IS*0,5 | Z | nächstes IS - 12h |
| | 37IZ | IS*0,58 | Z | nächstes IS - 13h |
| | 38IZ | IS*0,66 | Z | nächstes IS - 14h |
| | 39IZ | IS*0,75 | Z | nächstes IS - 15h |
| | 40IZ | IS*0,83 | Z | nächstes IS - 16h |
| | 41IZ | IS*0,91 | Z | nächstes IS - 17h |
| | 42IZ | IS*1,0 | Z | nächstes IS - 18h |
| | 43IZ | IS*1,0 | Z | nächstes IS - 19h |
| | 44IZ | IS*1,0 | Z | nächstes IS - 20h |
| | 45IZ | IS*1,0 | Z | nächstes IS - 21h |
| | 46IZ | IS*1,0 | Z | nächstes IS - 22h |
| | 47IZ | IS*1,0 | Z | nächstes IS - 23h |

Für Behandlung mit Tabletten wird ebenfalls ein Regelwerk hinterlegt.
4.)
Empfehlung zur Therapie nach Ankunft
Ankunft
Ort: London Heathrow (LHR) Zeit: 17:35 Uhr Ankunft: 15.11.00

| 15.11.00 | | |
|---|---|---|
| Dosierung | | spät 22:00 |
| Basal-Insulin | | 30 E |
| Spätmahlzeit | | ggf. |

| 16.11.00 | | |
|---|---|---|
| Dosierung | früh | spät |
| | 07:00 | 22:00 |
| Basal-Insulin | | 30 E |
| Glibenclamid | 1 Tablette | |
| Frühstück | X | |

## Patentansprüche

1. Auf einem Computersystem ausführbares Verfahren zur Erstellung eines angepassten Reise-Behandlungsschemas zur Applikation eines Medikaments bei einer Fernreise, aufweisend die Schritte:
Erfassung eines stationären Behandlungsschemas zur Applikation des Medikaments,
- Erfassung von Start- und Zielort sowie Reisezeitpunkt der Fernreise,
- Bestimmung der Zeitzonendifferenz zwischen Start- und Zielort, und
- Erstellung eines angepassten Reise-Behandlungsschemas basierend auf dem stationären Behandlungsschema in Abhängigkeit von der Zeitzonendifferenz und dem Reisezeitpunkt.

2. Verfahren nach Anspruch 1, wobei ein Satz von Reise-Behandlungsschemata in Abhängigkeit von einem Nicht-Applikationszeitraum zwischen einer letzten Applikation nach dem stationären Behandlungsschema unter Zugrundelegung der Ortszeit am Startort der Femreise und der nächsten Applikation nach dem stationären Schema unter Zugrundelegung der Ortszeit am Zielort erstellt wird.

3. Verfahren nach Anspruch 2, wobei der Satz von Reise-Behandlungsschemata in einem Speicher abgespeichert wird, die Nicht-Applikationszeit auf Grund des erfassten Start- und Zielortes sowie dem Reisezeitpunkt bzw. Zeitpunkt der Zeitzonenumstellung bestimmt wird und auf Basis des Nicht-Applikationszeitraumes aus dem Satz der Reise-Behandlungsschemata das anzuwendende Reise-Behandlungsschema ausgewählt wird.

4. Verfahren nach Anspruch 3, wobei verschiedene Reise-Behandlungsschemata für verschiedene Insulintypen und/oder blutzuckersenkende Medikamente erstellt werden.

5. Verfahren nach Anspruch 4, wobei ein Reise-Behandlungsschema zusätzliche Hinweise zu empfohlenen Zeitpunkten zur Nahrungsaufnahme insbesondere von Kohlehydraten enthält.

6. Verfahren nach Anspruch 5, ferner umfassend die Erfassung einer tatsächlich erfolgten Kohlehydrataufnahme durch die Nahrungszufuhr.

7. Verfahren nach Anspruch 6, wobei die Erfassung der Kohlehydrataufnahme durch Eingabe des Benutzers erfolgt.

8. Verfahren nach einem der Ansprüche 4 bis 7, ferner umfassend die Erfassung der Blutzuckerkonzentration des Benutzers.

9. Verfahren nach einem der Ansprüche 4 bis 7, ferner umfassend die kontinuierliche Erfassung der Blutzuckerkonzentration durch Glukosesensoren oder nicht-invasive Techniken.

10. Verfahren nach Anspruch 8 oder 9, ferner umfassend die kontinuierliche Erfassung der Zuckerkonzentration in anderen Körperflüssigkeiten.

11. Verfahren nach einem der Ansprüche 4 bis 10, wobei die verschiedenen Insulintypen nach ihrem Wirkungsprofil klassifiziert werden.

12. Verfahren nach einem der Ansprüche 4 bis 11, wobei alle in einem Startund/oder Zielland der Reise zugelassenen Insulin- und/oder blutzuckersenkenden Therapeutika in dem Satz von Reise-Behandlungsschemata aufgenommen sind.

13. Verfahren nach Anspruch 12, wobei der Satz von Reise-Behandlungsschemata bei neu zugelassenen Insulinpräparaten und/oder bluckzuckersenkenden Therapeutika aktualisiert wird.

14. Verfahren nach einem der Ansprüche 4 bis 13, wobei der Satz von Reise-Behandlungsschemata entsprechend neuen medizinischen Erkenntnissen aktualisiert wird.

15. Verfahren nach einem der Ansprüche 1 bis 14, wobei gegebenenfalls vorhandene lokalen Zeitregelungen wie Sommerzeitumstellungen in einzelnen Zeitzonen bei der Erstellung des Reise-Behandlungsschemas berücksichtigt werden.

16. Verfahren nach einem der Ansprüche 1 bis 15, wobei Start- und Zielort der Fernreise über ein Satellitenkommunikationssystem (GPS) ermittelt wird.

17. Verfahren nach einem der Ansprüche 1 bis 16, wobei das erstellte Reise-Behandlungsschema von einem zentralen Computer über Internet und/oder drahtlose Kommunikationsmittel abrufbar ist.

18. Verfahren nach einem der Ansprüche 1 bis 17, wobei das Reise-Behandlungsschema einen festgelegten Übergangszeitraum nach dem Zeitpunkt der Zeitumstellung abdeckt.

19. Verfahren nach Anspruch 18, wobei der Übergangszeitraum bis zu 14 Tagen, vorzugsweise ungefähr 48 Stunden beträgt.

20. Verfahren nach einem der Ansprüche 3 bis 19, wobei ein zugehöriger Satz von Reise-Behandlungsschemata für ein vorgegebenes stationäres Behandlungsschema als Tabelle eines Tabellenkalkulationsprogramms abgespeichert wird.

21. Verfahren nach Anspruch 20, wobei eine Zeile den Zeitablauf des stationären Behandlungsschemas enthält und nachfolgende Zeilen das zugehörige Reise-Behandlunggschema für verschieden Zeitzonendifferenzen enthalten.

22. Verfahren nach einem der Ansprüche 1 bis 21, wobei ein Reise-Behandlungsschema für eine kontinuierliche blutzuckersenkende Therapie mittels eines Insulindosiergerätes erstellt wird.

23. Vorrichtung zur Erstellung eines angepassten Reise-Behandlungsschemas zur Applikation eines Medikaments bei einer Fernreise aufweisend:
- eine Einrichtung zur Erfassung eines stationären Behandlungsschemas zur Applikation des Medikaments,
- eine Einrichtung zur Erstellung eines Satzes von Reise-Behandlungsschemata basierend auf dem stationären Behandlungsschema für verschiedene Zeitzonendifferenzen und Zeitpunkte der Zeitzonenumstellung,
- eine Speichereinrichtung zur Speicherung des Satzes angepasster Reise-Behandlungsschemata,
- eine Einrichtung zur Erfassung von Start- und Zielort der Femreise,
- eine Einrichtung zur Bestimmung der Zeitzonendifferenz,
- eine Auswahleinrichtung zur Auswahl eines der gespeicherten Reise-Behandlungsschemata in Abhängigkeit von der Zeitzonendifferenz und dem Zeitpunkt der Zeitzonenumstellung, und
- eine Ausgabeeinrichtung zur Ausgabe des ausgewählten Behandlungsschemas.

24. Vorrichtung nach Anspruch 23, wobei die Einrichtung zur Erstellung eines Satzes von Reise-Behandlungsschemata einen Nicht-Applikationszeitraum von der letzten Applikation gemäß stationären Behandlungsschema nach Startzeitzone bis zur nächsten Applikation gemäß Behandlungsschema nach Zielzeitzone als Ordnungsparameter für den Satz von Reise-Behandlungsschemata bestimmt.

25. Vorrichtung nach Anspruch 23 oder 24, wobei das erstellte Reise-Behandlungsschema zur Behandlung von Diabetes vorgesehen ist.

26. Vorrichtung nach Anspruch 25, wobei das Behandlungsschema Insulingaben, blutzuckersenkende Therapeutika und/oder Anweisungen zur Einnahme von Mahizeiten umfasst.

27. Vorrichtung nach einem der Ansprüche 23 bis 26, wobei die Speichereinrichtung Sätze von Reise-Behandlungsschemata für alle zugelassenen Insulintypen und/oder blutzuckersenkenden Therapeutika enthält, die im Startland und/oder Zielland zugelassen sind.

28. Vorrichtung nach einem der Ansprüche 23 bis 27, wobei die Vorrichtung ein angepasstes Reise-Behandlungsschema für eine kontinuierliche blutzuckersenkende Therapie mittels eines Insulindosiergerätes erstellt.

29. Vorrichtung nach einem der Ansprüche 23 bis 28, wobei die Einrichtung zur Berechnung der Zeitzonendifferenz lokale Zeitregelungen wie Sommerzeitregelungen mitberücksichtigt.

30. Vorrichtung nach einem der Ansprüche 23 bis 29, femer aufweisend eine Eingabeeinrichtung zur Eingabe von Startort und Zielort der Femreise.

31. Vorrichtung nach einem der Ansprüche 23 bis 29 ferner ausweisend eine Einrichtung zur Positionsbestimmung über ein Satellitenkommunikationssytem (GPS).

32. Vorrichtung nach einem der Ansprüche 23 bis 31 ferner aufweisend eine akustische oder optische Warneinrichtung zur Erinnerung an eine erforderliche Applikation eines Medikaments.

33. Vorrichtung nach einem der Ansprüche 23 bis 32 ferner aufweisend eine Anzeigeeinrichtung zur Anzeige des Reise-Behandlungsschemas.

34. Vorrichtung nach einem der Ansprüche 23 bis 33, wobei die Vorrichtung in einem mobilen Endgerät wie einem Laptop-Computer, einem elektronischen Organizer (Personal Digital Assistant, PDA) oder einem Mobiltelefon integriert ist.

35. Vorrichtung nach einem der Ansprüche 23 bis 33, wobei die Vorrichtung in einem Gerät zur Messung der Blutzuckerwerte eines Benutzers integriert ist.

36. Vorrichtung nach einem der Ansprüche 23 bis 33, wobei die Vorrichtung in einem Gerät zur kontinuierlichen Messung der Zuckerkonzentration eines Benutzers integriert ist.

37. Computerprogramm aufweisend Programmcode zur Ausführung des Verfahrens nach einem der Ansprüche 1 bis 22 auf einem Computer.

38. Computerprogramm nach Anspruch 37 aufweisend Programmschnittstellen zur Integration in ein persönliches Zeitplanungsprogramm (Personal Information Manager, PIM).
